Europäisches Patentamt

European Patent Office

Office européen des brevets

(19)

(11)   **EP 0 639 705 B1**

(12)   **EUROPÄISCHE PATENTSCHRIFT**

(45) Veröffentlichungstag und Bekanntmachung des Hinweises auf die Patenterteilung:
**25.06.1997   Patentblatt 1997/26**

(51) Int Cl.⁶: **F02D 41/26**, F02P 5/04

(21) Anmeldenummer: **93107008.0**

(22) Anmeldetag: **29.04.1993**

(54) **Elektronische Steuerung**

Electronic control

Commande électronique

(84) Benannte Vertragsstaaten:
**DE FR GB IT**

(43) Veröffentlichungstag der Anmeldung:
**22.02.1995   Patentblatt 1995/08**

(73) Patentinhaber: **SIEMENS AKTIENGESELLSCHAFT**
**80333 München (DE)**

(72) Erfinder:
• **Wellnhofer, Helmut, Dipl.-Ing.**
**W-8403 Bad Abbach (DE)**
• **Dirnberger, Reinhold, Dipl.-Ing. (FH)**
**W-8400 Regensburg (DE)**

(56) Entgegenhaltungen:
| | |
|---|---|
| EP-A- 0 360 528 | DE-A- 3 238 153 |
| DE-A- 4 004 516 | US-A- 4 255 789 |
| US-A- 5 162 999 | |

**Beschreibung**

Die Erfindung betrifft ein Verfahren zur Bildung einer periodisch von einem Steuergerät in Ausgabeperioden auszugebenden Steuergröße nach dem Oberbegriff des Anspruchs 1 (DE 40 04 516 A1).

Bei elektronischen Motorsteuergeräten für Brennkraftmaschinen bestehen die ausgegebenen Steuergrößen, beispielsweise für den Zündwinkel oder für die Kraftstoff-Einspritzmenge, aus mehreren Einzelkomponenten, welche aus von verschiedenen Sensoren gelieferten Meßwerten berechnet oder aus einem diesen Meßwerten zugeordneten Speicher ausgelesen werden. Solche Rechen- oder Auslesevorgänge werden nachfolgend "Ermittlungen" genannt.

Für die Zündung werden beispielsweise neben anderen Meßwerten die Motordrehzahl, der Druck im Luftansaugkanal (für jeden Zylinder getrennt sowie als Mittelwert für alle Zylinder über zwei Kurbelwellenumdrehungen oder ein Vielfaches davon), die Temperaturen von Ansaugluft und Kühlwasser oder Motoröl, die Kraftstoffqualität und der jeweilige Betriebszustand der Brennkraftmaschine für diese Ermittlungen herangezogen.

Die Ermittlung z.B. des Zündwinkels muß den Echtzeitanforderungen der Brennkraftmaschine genügen, d.h., in die Berechnung jedes Zündwinkels aller Zylinder sollen die aktuellen Meßwerte eingehen. Da es sich im wesentlichen um analoge Größen handelt, müssen solche vor dem Einlesen in das Motorsteuergerät in digitale Größen umgewandelt werden.

Es müssen jeweils zwischen zwei Zündungen in aufeinanderfolgenden Zylindern, also bei einem Vierzylindermotor während einer halben Kurbelwellenumdrehung, bei einem Achtzylindermotor dementsprechend während einer Viertelumdrehung der Kurbelwelle, die jeweils einer Ausgabeperiode der Steuer- oder Regelgrößen entsprechen, die erforderlichen Sensor-Ausgangssignale eingelesen und digitalisiert werden und entsprechend diesen Meßwerten die Einzelkomponenten ermittelt (berechnet oder aus einem gespeicherten Kennfeld oder einer Tabelle ausgelesen) und zu den Steuergrößen verknüpft werden.

Bei aufwendigen Brennkraftmaschinen mit vielen Zylindern und mit mikroprozessor-gesteuerten Steuergeräten mit einer Vielzahl von Sensoren und Berechnungsvorgängen wird bei hohen Motordrehzahlen die Ausgabeperiode der Steuergrößen kürzer als die erforderliche Ermittlungszeit für diese Größen. Dies hat zur Folge, daß beispielsweise die Zündwinkel über mehrere Ausgabeperioden bzw. mehrere Zündungen konstant bleiben, bis ein neuer Wert vorliegt. Im Hochdrehzahlbereich bei gleichzeitiger Lastdynamik (schnelle Gasstöße) führt diese Methode zu motorunverträglichen Betriebszuständen, beispielsweise zu Motorklopfen infolge nicht aktueller Zündzeitpunkte.

Bei dem Steuergerät nach der DE 40 04 516 A1 soll dieses Problem dadurch gelöst werden, daß weitere Mikroprozessoren (Controller) vorgesehen werden, welche die eingelesenen Meßwerte in unterschiedlichen Ebenen und mit unterschiedlichen Prioritäten parallel und unabhängig voneinander verarbeiten sollen. Dazu ist ein entsprechend leistungsfähiges Prozessor-Kommunikationsinterface erforderlich. Eine derartige Lösung ist teuer und erfordert einen hohen Hard- und Softwareaufwand. Sie birgt entsprechend viele Fehlermöglichkeiten in sich.

Nach einer anderen Lösung werden bei joder Neuberechnung einer Steuergröße die notwendigen Sensordaten A/D-Konver tiert (US-A-4 255 789).

Demgegenüber ist es Aufgabe der Erfindung, ein Verfahren zur Bildung dieser Steuergrößen anzugeben, welches ohne zusätzlichen Hardwareaufwand gegenüber bekannten Lösungen auskommt und dennoch im Hochdrehzahlbereich aktuellere Steuergrößen für jede Ausgabeperiode zur Verfügung stellt.

Diese Aufgabe wird durch die im Anspruch 1 genannten Merkmale gelöst.

Danach wird das Einlesen der Sensor-Ausgangssignale in Abhängigkeit von deren maximaler Änderungsgeschwindigkeit in unterschiedlichen, periodischen Abständen durchgeführt. Es werden bei hohen Drehzahlen beispielsweise Signale für

"Motordrehzahl" und "Druck im Luftansaugkanal" (in einem Zeitfenster des Ansaugtaktes jedes Zylinders), die sich sehr schnell ändern können, in jeder Periode,

"Motortemperatur" und "Ansauglufttemperatur", die sich nicht so schnell ändern, nach jeder zweiten oder vierten Periode, und

"Kraftstoffqualität", die sich allenfalls nach einem Betankungsvorgang wesentlich ändert, nur nach jeder achten (oder noch größeren) Periode

in das Steuergerät eingelesen.

Desgleichen werden Einzelkomponenten, zu deren Ermittlung Sensor-Ausgangssignale mit großer maximaler Änderungsgeschwindigkeit herangezogen werden und die einen wesentlichen Anteil an der Bildung der Steuergrößen haben, in entsprechend geringeren Abständen (Perioden) ermittelt als Einzelkomponenten, zu deren Ermittlung Sensor-Ausgangssignale mit geringerer maximaler Änderungsgeschwindigkeit herangezogen werden, und die dementsprechend (im Bereich von etwa 8 oder 16 Kurbelwellenumdrehungen) keine oder keine gravierenden Änderungen erfahren oder zum Wert der Steuergröße einen nur geringen Beitrag leisten.

In weiterer Ausgestaltung der Erfindung sind die Einlese- und Ermittlungsperioden bzw. deren Abstände von der Motordrehzahl abhängig.

In jeder Ausgabeperiode, bei Zündanlagen für Vierzylindermotoren also während jeder halben Kurbelwellenumdrehung (180°KW), wird aus den vorliegenden Einzelkomponenten (Teilzündwinkelbeträgen) ein Gesamtzündwinkel als Steuergröße gebildet und ausgegeben.

Auf diese Weise ist bei gleichem Hardwareaufwand ein erheblicher Lese-, Digitalisier- und Berechnungsaufwand einzusparen, obwohl die ermittelten Steuergrößen den jeweiligen Betriebszuständen wesentlich besser angepaßt werden können als bei bekannten Steuergeräten, da in jeder Ausgabeperiode, d.h., für jede Zündung, gerade auch im Hochdrehzahlbereich, eine aktualisierte Steuergröße zur Verfügung steht.

Die Erfindung wird anhand der Figuren näher erläutert; es zeigen:

Figur 1      ein schematisches Blockschaltbild eines elektronischen Motor-Steuergerätes für ein Kraftfahrzeug, und

Figur 2      eine Tabelle mit den Aktivitäten zugeordneten Zei len 2 bis 13 und den Ausgabeperioden zugeordneten Spalten 5 bis 20, wobei in einer Ausgabeperiode durchgeführte Aktivitäten mit "x" markiert sind.

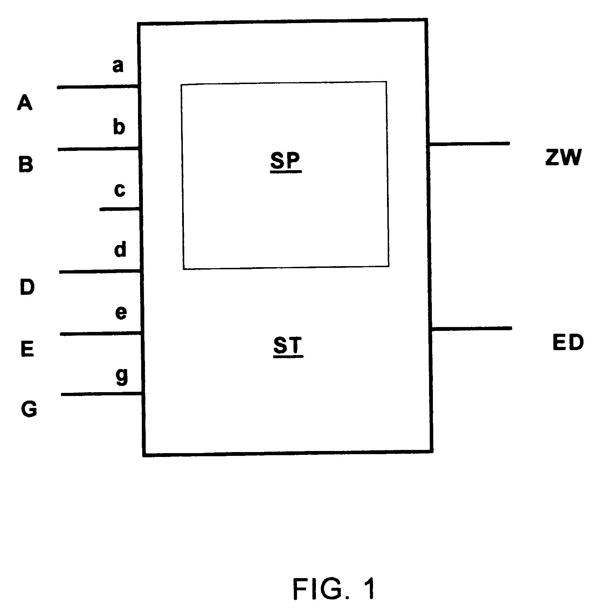

Figur 1 zeigt ein schematisches Blockschaltbild eines elektronischen Motor-Steuergerätes ST für eine nicht dargestellte Kraftfahrzeug-Brennkraftmaschine. Die Ausgangssignale a bis e und g von Sensoren A,B,D,E und G werden diesem mikroprozessorgesteuerten Steuergerät zugeführt, welches aus ihnen und anderen, nicht dargestellten Eingangssignalen Teilzündwinkel zwl bis zw5 ermittelt, d.h., berechnet oder aus einem im Steuergerät ST integrierten Speicher SP ausliest und daraus Steuergrößen, hier die Zündwinkel ZW und Kraftstoff-Einspritzdauern (= -mengen) ED für die Steuerung der Brennkraftmaschine bildet.

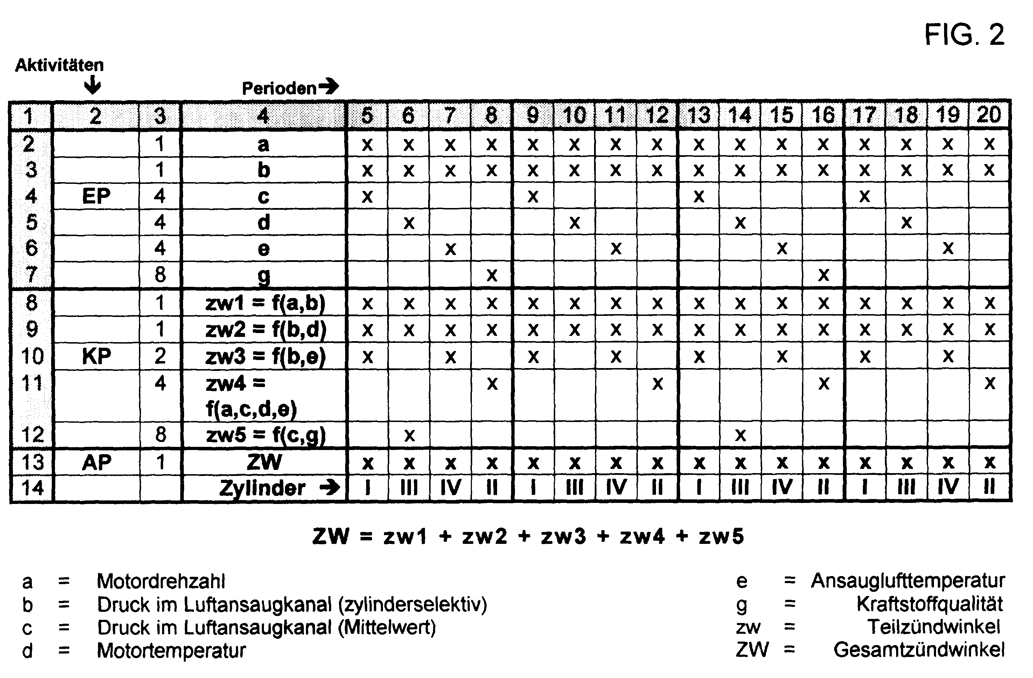

Figur 2 zeigt für ein derartiges Steuergerät am Beispiel der Ermittlung von Zündwinkeln ZW für eine nicht dargestellte Vierzylinder-Brennkraftmaschine im Hochdrehzahlbereich eines Kraftfahrzeuges eine Tabelle mit 14 Zeilen und 20 Spalten, in welcher die Zeilen in Spalte 1 und die Spalten in Zeile 1 numeriert sind, wobei im folgenden die Zeilen durch "Z." und die Spalten durch "Sp." abgekürzt sind, und in welcher

in Z.2 bis Z.7:      die Einleseperioden EP der Sensor-Ausgangssignale a, b, c, d, e, und g;
in Z.8 bis Z.12:      die Ermittlungsperioden KP der Einzelkomponenten zw1 bis zw5;
in Z.13:      die Ausgabeperioden AP für die Zündwinkel ZW; und
in Z.14:      die jeweiligen Zylinder, in welchen diese Zündwinkel einen Zündfunken auslösen;

zutreffenden Falles durch ein "x" markiert sind. Die Zylinder sind in Zeile 14, beginnend mit Sp.5, in der Zündreihenfolge I-III-IV-II, fortlaufend numeriert. In diesem schematischen Ausführungsbeispiel sind die Sensor-Ausgangssignale oder die aus ihnen abgeleiteten Werte(Z.2 bis 7; Sp.4)

a der Motordrehzahl,
b dem zylinderselektiven Druck im Luftansaugkanal,
c dem Mittelwert des Druckes im Luftansaugkanal,
d der Motortemperatur,
e der Ansauglufttemperatur und
g der Kraftstoffqualität

zugeordnet und sind die fünf Einzelkomponenten zw1 bis zw5 (Teilzündwinkel, die, miteinander verknüpft, den Gesamtzündwinkel ZW ergeben, siehe Sp.4, Z.8 bis 13)

zw1   aus den Sensor-Ausgangssignalen a und b,
zw2   aus den Sensor-Ausgangssignalen b und d,
zw3   aus den Sensor-Ausgangssignalen b und e,
zw4   aus den Sensor-Ausgangssignalen a,c,d und e,
zw5   aus den Sensor-Ausgangssignalen c und g

ermittelt. Wie in Figur 2, Sp.4 angegeben, sind die Einzelkomponenten, hier die Teilzündwinkel, ganz allgemein eine Funktion der zu ihrer Ermittlung erforderlichen Sensor-Ausgangssignale:

$$zw1 = f(a,b) \text{ u.s.w. bis } zw5 = f(c,g).$$

Die Sensor-Ausgangssignale a (Motordrehzahl) und b (zylinderselektiver Druck im Ansaugkanal), Z.2 und 3, sind die Signale, die sich am schnellsten verändern, sie werden deshalb alle 180°KW, d.h., in jeder Ausgabeperiode (in den Spalten 5 bis 20 durch "x" markiert) in das Steuergerät ST eingelesen und, falls analog, digitalisiert.

Das Signal c als Mittelwert der Signale b, und die Signale d,e und g ändern sich wesentlich langsamer. Der Mittelwert des Druckes (Signal c) wird zwar aus den Signalen b im Steuergerät ST berechnet, aber in diesem Ausführungsbeispiel vereinfachend als Ausgangssignal bezeichnet und behandelt.

In Sp.3 sind die Periodenabstände, in welchen die Sensorausgangssignale a,b,d,e und g eingelesen bzw. c berechnet, die Ermittlungen der Teilzündwinkel zw1 bis zw5 und die Bildung der Gesamtzündwinkel ZW durchgeführt werden, in Ausgabeperioden von je 180°KW angegeben. Die Zahl "1" in Sp.3 bedeutet demnach "nach jeder halben Kurbelwellenumdrehung", "2" = "nach jeder", "4" = "nach jeder zweiten", "8" = "nach jeder vierten Kurbelwellenumdrehung" u.s.w..

Diese Perioden sind für die jeweiligen Signale aus den Spalten 5 bis 20 ersichtlich. Dort ist auch die Verteilung der einzelnen Aktivitäten angegeben, die in der Weise erfolgt, daß das Steuergerät in den einzelnen Ausgabeperioden eine möglichst gleichmäßige "Arbeitsmenge" zu bewältigen hat.

Die Ermittlung der Teilzündwinkel und die Bildung der Gesamtzündwinkel erfolgt in den angegebenen Perioden mit den jeweils zuletzt ermittelten Sensor-Ausgangssignalen bzw. Teilzündwinkeln.

So wird z.B. der Gesamtzündwinkel ZW, der in diesem Ausführungsbeispiel aus der Summe der fünf Teilzündwinkel gebildet wird, (ZW = zw1 + zw2 + zw3 + zw4 + zw5),in Sp.10 für Zylinder Nr. III aus den

| in Spalte | 10 ermittelten Teilzündwinkeln | zw1,zw2, |
|-----------|-------------------------------|----------|
| in Spalte | 9 ermittelten Teilzündwinkel  | zw3,     |
| in Spalte | 8 ermittelten Teilzündwinkel  | zw4,     |
| in Spalte | 6 ermittelten Teilzündwinkel  | zw5      |

zusammengesetzt.

Je niedriger die Drehzahlen werden, umso kleiner (gemessen in Kurbelwellen-Winkelgraden) können die Einleseperioden EP und die Ermittlungsperioden KP werden, da dann die zur Verfügung stehenden Zeiten immer länger werden, bis schließlich bei niedrigsten Drehzahlen alle Sensor-Ausgangssignale und alle Teilzündwinkel, so wie der Gesamtzündwinkel ZW auch, in jeder Periode (während jeder halben Umdrehung der Kurbelwelle) eingelesen und ermittelt werden können.

Daraus ist zu ersehen, daß mit diesem Verfahren ein großer Teil des bei bekannten Steuergeräten erforderlichen Bearbeitungsaufwandes für die Ermittlung der Zündwinkel und der Einspritzdauern und anderer, hier nicht erwähnter Steuersignale, eingespart werden kann und trotzdem auch im Hochdrehzahlbereich für jede Periode aktuellere Steuerwerte als bei bekannten Lösungen erreichbar sind.

Dadurch können bis zu wesentlich höheren Motordrehzahlen die Zündwinkel ZW und Einspritzmengen während jeder halben Umdrehung der Kurbelwelle, also für jeden Zylinder, ermittelt werden. Sollte die zur Verfügung stehende Zeit bei noch höheren Motordrehzahlen auch hier nicht mehr ausreichen, so sind dennoch durch die wesentlich kürzere Ermittlungsdauer an die Erfordernisse besser angepaßte Werte erreichbar als bei bekannten Einrichtungen.

Das Verfahren, welches in diesem Ausführungsbeispiel anhand der Bildung der Zündwinkel in elektronischen Zündsteuergeräten von Kraftfahrzeug-Brennkraftmaschinen erläutert wurde, ist ganz allgemein auch auf alle elektronischen Steuergeräte, die bei der periodischen Ermittlung von Steuergrößen aus einer Vielzahl von Eingangssignalen unterschiedlicher maximaler Änderungsgeschwindigkeiten mit Zeitproblemen zu kämpfen haben, ebenfalls anwendbar.

Bezugszeichen:

| A  | Motordrehzahlsensor |
|----|---------------------|
| B  | Drucksensor im Luftansaugkanal |
| D  | Motortemperatursensor |
| E  | Ansauglufttemperatursensor |
| G  | Kraftstoffqualitätssensor |
| AP | Ausgabeperiode |
| a  | Ausgangssignal des Motordrehzahlsensors |
| b  | Ausgangssignal des Drucksensors im Luftansaugkanal |
| c  | Mittelwert des Druckes im Luftansaugkanal |
| d  | Ausgangssignal des Motortemperatursensors |
| e  | Ausgangssignal des Ansauglufttemperatursensors |

| g | Ausgangssignal des Kraftstoffqualitätssensors |
|---|---|
| ED | Steuergröße (Kraftstoff-Einspritzdauer) |
| EP | EP Einleseperiode |
| KP | Ermittlungsperiode |
| SP | Speicher |
| ST | Steuergerät |
| zw1 bis zw5 | Einzelkomponenten |
| ZW | Steuergröße (Zündwinkel) |

**Patentansprüche**

1. Verfahren zur Bildung einer periodisch von einem Steuergerät (ST) in Ausgabeperioden (AP) auszugebenden Steuergröße (ZW, ED) zur Steuerung eines Gerätes, insbesondere der Zündung oder Kraftstoffeinspritzung von Brennkraftmaschinen, bei dem Ausgangssignale (a-e, g) von wenigstens zwei Sensoren (A,B,D,E; G) in das Steuergerät eingelesen werden und darauf basierend Einzelkomponenten (zw1-zw5) der Steuergröße (ZW, ED) ermittelt werden, dadurch gekennzeichnet,

   - daß das Einlesen der Sensor-Ausgangssignale (a-e; g) und das Ermitteln der Einzelkomponenten (zw1-zw5) periodisch in Abständen von einer Einleseperiode (EP) bzw. einer Ermittlungsperiode (KP) erfolgt, die der Ausgabeperiode (AP) der Steuergröße (ZW, ED) gleich oder ein Vielfaches davon ist,

   - daß die Einleseperiode (EP) eines Sensor-Ausgangssignals (a-e; g) von der Änderungsgeschwindigkeit dieses Signals abhängig ist, wobei die Einleseperiode (EP) umso größer ist, je kleiner die maximale Änderungsgeschwindigkeit dieses Signals ist,

   - daß die Ermittlungsperiode (KP) jeder Einzelkomponente (zw1-zw5) von den Einleseperioden (EP) der an jeder Einzelkomponente beteiligten Sensor-Ausgangssignale (a-e; g) abhängig ist, und

   - daß die Steuergröße (ZW,ED) in jeder Ausgabeperiode (AP) aus allen Einzelkomponenten (zw1-zw5) mit den in dieser Ausgabeperiode gültigen Werten gebildet wird.

2. Verfahren nach Anspruch 1, dadurch gekennzeichnet, daß die Größe der Einleseperioden (EP) der Sensor-Ausgangssignale (a-e; g) und die der Ermittlungsperioden (KP) der Einzelkomponenten (zw1-zw5) abhängig von einem Betriebsparameter des zu steuernden Gerätes variierbar ist.

3. Verfahren nach Anspruch 2, dadurch gekennzeichnet, daß ein Betriebsparameter des zu steuernden Gerätes die Motordrehzahl ist.

**Claims**

1. Method for forming a control variable (ZW, ED), to be output periodically by a control unit (ST) in output periods (AP), for controlling a device, in particular the ignition or fuel injection of internal combustion engines, in which method output signals (a-e, g) of at least two sensors (A,B,D,E;G) are read into the control unit and, taking this as the basis, individual components (zw1-zw5) of the control variable (ZW, ED) are determined, characterized

   - in that the reading in of the sensor output signals (a-e; g) and the determination of the individual components (zw1-zw5) takes place periodically at intervals of a reading-in period (EP) or a determination period (KP) which is identical to the output period (AP) of the control variable (ZW, ED) or is a multiple thereof,

   - in that the reading-in period (EP) of a sensor output signal (a-e; g) is dependent on the rate of change of this signal, the reading-in period (EP) being greater the smaller the maximum rate of change of this signal,

   - in that the determination period (KP) of each individual component (zw1-zw5) is dependent on the reading-in periods (EP) of the sensor output signals (a-e; g) involved in each individual component, and

- in that the control variable (ZW, ED) in each output period (AP) is formed from all the individual components (zw1-zw5) with the values which are valid in this output period.

2. Method according to Claim 1, characterized in that the magnitude of the reading-in periods (EP) of the sensor output signals (a-e; g) and that of the determination periods (KP) of the individual components (zw1-zw5) can be varied as a function of an operating parameter of the device to be controlled.

3. Method according to Claim 2, characterized in that one operating parameter of the device to be controlled is the engine speed.

**Revendications**

1. Procédé, permettant de former une grandeur de commande (ZW, ED) qui doit être délivrée périodiquement par un appareil de commande (ST) dans des périodes de délivrance (AP) et qui sert à commander un appareil, notamment l'allumage ou l'injection de carburant de moteurs à combustion interne, selon lequel des signaux de sortie (a-e ; g) provenant d'au moins deux capteurs (A, B, D, E ; G) sont lus dans l'appareil de commande et, sur cette base, des composantes élémentaires (zw1-zw5) de la grandeur de commande (ZW, ED) sont déterminées, caractérisé :

   - en ce que la lecture des signaux de sortie de capteur (a-e ; g) et la détermination des composantes élémentaires (zw1-zw5) ont lieu périodiquement, à des intervalles d'une période de lecture (EP) ou d'une période de détermination (KP) qui est égale à la période de délivrance (AP) de la grandeur de commande (ZW, ED) ou est un multiple de cette période,
   - en ce que la période de lecture (EP) d'un signal de sortie de capteur (a-e ; g) dépend de la vitesse de variation de ce signal, la période de lecture (EP) étant d'autant plus grande que la vitesse de variation maximale de ce signal est plus petite,
   - en ce que la période de détermination (KP) de chaque composante élémentaire (zw1-zw5) dépend des périodes de lecture (EP) des signaux de sortie de capteur (a-e ; g) participant à chaque composante élémentaire et
   - en ce que la grandeur de commande (ZW, ED) est formée, dans chaque période de délivrance (AP), de toutes les composantes élémentaires (zw1-zw5) présentant les valeurs valables dans cette période de délivrance.

2. Procédé selon la revendication 1, caractérisé en ce que la grandeur des périodes de lecture (EP) des signaux de sortie de capteur (a-e ; g) et celle des périodes de détermination (KP) des composantes élémentaires (zw1-zw5) sont variables en fonction d'un paramètre de fonctionnement de l'appareil à commander.

3. Procédé selon la revendication 2, caractérisé en ce qu'un paramètre de fonctionnement de l'appareil à commander est le régime du moteur.

FIG. 1

## FIG. 2

Aktivitäten ↓

Perioden →

| 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|----|----|----|----|----|----|----|----|----|----|----|
| 2 | | 1 | a | x | x | x | x | x | x | x | x | x | x | x | x | x | x | x | x |
| 3 | | 1 | b | x | x | x | x | x | x | x | x | x | x | x | x | x | x | x | x |
| 4 | EP | 4 | c | x | | | | x | | | | x | | | | x | | | |
| 5 | | 4 | d | | x | | | | x | | | | x | | | | x | | |
| 6 | | 4 | e | | | x | | | | x | | | | x | | | | x | |
| 7 | | 8 | g | | | | x | | | | | | | | x | | | | |
| 8 | | 1 | $zw1 = f(a,b)$ | x | x | x | x | x | x | x | x | x | x | x | x | x | x | x | x |
| 9 | | 1 | $zw2 = f(b,d)$ | x | x | x | x | x | x | x | x | x | x | x | x | x | x | x | x |
| 10 | KP | 2 | $zw3 = f(b,e)$ | x | | x | | x | | x | | x | | x | | x | | x | |
| 11 | | 4 | $zw4 = f(a,c,d,e)$ | | | | x | | | | x | | | | x | | | | x |
| 12 | | 8 | $zw5 = f(c,g)$ | | x | | | | | | | | x | | | | | | |
| 13 | AP | 1 | ZW | x | x | x | x | x | x | x | x | x | x | x | x | x | x | x | x |
| 14 | | | Zylinder → | I | III | IV | II | I | III | IV | II | I | III | IV | II | I | III | IV | II |

$$ZW = zw1 + zw2 + zw3 + zw4 + zw5$$

a = Motordrehzahl  
b = Druck im Luftansaugkanal (zylinderselektiv)  
c = Druck im Luftansaugkanal (Mittelwert)  
d = Motortemperatur  

e = Ansauglufttemperatur  
g = Kraftstoffqualität  
zw = Teilzündwinkel  
ZW = Gesamtzündwinkel

EP 0 639 705 B1